# EUROPÄISCHE PATENTANMELDUNG

(11) **EP 1 475 216 A1**
(43) Veröffentlichungstag der Anmeldung: **10.11.2004**
(21) Anmeldenummer: 04003340.9
(22) Anmeldetag: 14.02.2004
(51) Int. Cl.: B29C 53/58, B29C 53/68, B29C 53/08, B29D 23/00, F16L 11/08

(54) **Verfahren und Vorrichtung zur Herstellung gekrümmter, fadenverstärkter, schlauchförmiger Gebilde**

(30) Priorität: 24.04.2003 DE 10318545
(71) Anmelder: ContiTech Luftfedersysteme GmbH, 30165 Hannover (DE)
(72) Erfinder: Berger, Markus, Dipl.-Ing., 31319 Sehnde (DE); Oehl, Rainer, Dipl.-Ing., 30938 Burgwedel (DE); Binder, Klaus, Dr., 31157 Sarstedt (DE)
(74) Vertreter: Gerstein, Hans Joachim, Dipl.-Ing.

(57) **Zusammenfassung**

Ein Verfahren zur Herstellung gekrümmter, fadenverstärkter, schlauchförmiger Gebilde aus Kautschuk- und Festigkeitsträgerschritten hat die Schritte:
a) Aufbringen einer ersten Kautschukschicht auf den Umfang von in eine Vorschubrichtung (X) vorgetriebenen Dornen (1);
b) Aufspiralisieren einer Vielzahl von parallelen Verstärkungsfäden (3) mit definierten Fadenwinkeln (α) bezogen auf die Vorschubachse (x) mit einem Spulengatter zur Ausbildung einer ersten Fadenlage, wobei die Dorne (1) durch ein die Dorne (1) umschließendes und die Verstärkungsfäden (3) am Innenumfang verteilt führendes rotierendes Umlenkelement (2) geführt werden; und
c) Aufbringen einer Deck-Kautschukschicht nach wahlweise mehrfacher Ausführung der Schritte a) und/oder b).

Es wird vorgeschlagen die Dorne (1) im Bereich des Umlenkelementes (2) außermittig durch das Umlenkelement (2) des Spulengatters zu führen.

## Beschreibung

Die Erfindung betrifft ein Verfahren zur Herstellung gekrümmter, fadenverstärkter, schlauchförmiger Gebilde aus Kautschuk- und Festigkeitsträgerschichten mit den Schritten:
a) Aufbringen einer ersten Kautschukschicht auf den Umfang von in eine Vorschubrichtung (X) vorgetriebenen Dornen;
b) Aufspiralisieren einer Vielzahl von parallelen Verstärkungsfäden mit definierten Fadenwinkeln bezogen auf die Vorschubachse mit einem Spulengatter zur Ausbildung einer ersten Fadenlage, wobei die Dorne durch ein die Dorne umschließendes und die Verstärkungsfäden am Innenumfang verteilt führendes rotierendes Umlenkelement geführt werden;
c) Aufbringen einer Deck-Kautschukschicht nach wahlweise mehrfacher Ausführung der Schritte a) und/oder b).

Die Erfindung betrifft weiterhin eine Vorrichtung zur Herstellung gekrümmter, fadenverstärkter, schlauchförmiger Gebilde nach einem solchen Verfahren mit mindestens einem Spulengatter, das ein in eine Vorschubrichtung vortreibbare Dorne umschließendes und Verstärkungsfäden am Innenumfang verteilt führendes rotierbares Umlenkelement hat.

Derartige fadenverstärkte, schlauchförmige Gebilde werden beispielsweise als Luftfederbälge für Luftfedern von Kraftfahrzeugen eingesetzt. Sie enthalten eine Vielzahl von Verstärkungsfäden, die in äquidistanten Abständen dicht nebeneinander liegen, um dem hohen Druck der Luftfeder standhalten zu können.

Das gattungsgemäße Verfahren und eine gattungsgemäße Vorrichtung ist beispielsweise aus der DE 25 45 058 C3 bekannt. Die Dorne werden hierbei konzentrisch durch die Rotationsachse des Umlenkelementes geführt, so dass über den Umfang verteilt ein konstanter Fadenwinkel gewährleistet wird.

Zur Verbesserung der Luftfedereigenschaften ist aus der DE 196 14 476 A1 und der EP 0 285 726 B1 bekannt, den Fadenwinkel über die Länge der Luftfedern zu variieren. Durch den veränderten Fadenwinkel in axialer Richtung des Luftfederbalgs hat dieser entsprechend des Fadenwinkels einen unterschiedlichen Außendurchmesser, so dass das Abrollverhalten und die Luftdrücke an die jeweiligen Anforderungen beim Einbau und Betrieb des Luftfederbalgs in einer Luftfeder angepasst werden kann.

Das Aufspiralisieren von Verstärkungsfäden auf in eine Vorschubrichtung geführte Dorne mit darauf extrudierter Kautschukschicht ist beispielsweise aus der DE 198 46 852 C2 bekannt. Dabei werden die Verstärkungsfäden in einem Umlenkelement auf dem Innenumfang des Umlenkelementes mit einem sehr geringen Spalt zum Dorn geführt. Die Verstärkungsfäden werden durch auf den Innenumfang des Umlenkelementes äquidistant verteilten Führungen auf den Außenumfang des Dorns bzw. der darauf befindlichen Kautschukschicht geführt, wobei das Umlenkelement mit einer Geschwindigkeit entsprechend eines erforderlichen Fadenwinkels zur Vorschubrichtung rotiert.

Beim Einbau beispielsweise von Luftfedern in Fahrzeugen ist die Einbausituation unter Umständen so ungünstig, dass gekrümmte Luftfedern eingesetzt werden müssen.

Gekrümmte schlauchförmige Gebilde werden herkömmlicherweise hergestellt, indem gerade fadenverstärkte Schlauchabschnitte zu einer gekrümmten Form vorgespannt und dann vulkanisiert werden. Ein solches Verfahren ist beispielsweise in der DE 25 45 058 C3 beschrieben. Nachteilig ist jedoch, dass der Verlauf der Verstärkungsfäden bei der Herstellung nicht an die gekrümmte Form angepasst sind. Bei der Vorspannung tritt dann unter Umständen eine die Qualität des Endproduktes beeinträchtigende Verschiebung der Verstärkungsfäden auf. Zudem ist nur eine vollständige Krümmung des Schlauchabschnitts, nicht hingegen die Herstellung ausgewählter gekrümmter Bereiche möglich.

Aufgabe der Erfindung ist es daher, ein Verfahren und eine Vorrichtung zur Herstellung gekrümmter, fadenverstärkter, schlauchförmiger Gebilde aus Kautschuk- und Festigkeitsträgerschichten zu schaffen, so dass eine Erzeugung gekrümmter Abschnitte mit geringem Aufwand während eines kontinuierlichen Produktionsprozesses möglich ist.

Die Aufgabe wird mit dem gattungsgemäßen Verfahren erfindungsgemäß dadurch gelöst, dass die Dorne im Bereich des Umlenkelementes außermittig durch das Umlenkelement des Spulengatters geführt werden.

Im Unterschied zu der herkömmlichen konzentrischen Durchführung der Dorne durch das Umlenkelement und den daraus resultierenden gleichen Fadenwinkeln über dem Umfang wird nunmehr eine außermittige Durchführung der Dorne durch das Umlenkelement vorschlagen. Hierzu muss der Innendurchmesser des Umlenkelementes entsprechend größer als der Durchmesser des mit mindestens einer Kautschukschicht bedeckten Dornes sein.

Der Fadenwinkel korrespondiert unmittelbar mit dem Abstand des Umlenkelementes zum Dorn, so dass bei der außermittigen Durchführung der Dorne über dem Umfang der Dorne unterschiedliche Fadenwinkel hergestellt werden. Über die Länge der Dorne bleiben die Fadenwinkel einer jeweiligen Umfangsposition hingegen gleich.

Aufgrund der unterschiedlichen Fadenwinkel über dem Umfang wird eine Krümmung des schlauchförmigen Gebildes verursacht, die sich nach dem Abziehen des fadenverstärkten, schlauchförmigen Gebildes von den Dornen und anschließendem Vulkanisieren selbsttätig einstellt. Damit ist vorteilhaft lediglich eine außermittige Durchführung der Dorne durch das Umlenkelement erforderlich, um gekrümmte schlauchartige Gebilde herzustellen, ohne dass weitere Schritte, wie das herkömmliche erforderliche Verbiegen der Gebilde vor der Vulkanisierung notwendig sind. Das erfindungsgemäße Verfahren hat zudem den Vorteil, dass durch Variation der außermittigen Durchführung und ggf. mittigen Durchführung in Teilbereichen ausgewählte Abschnitte des schlauchförmigen Gebildes im laufenden Herstellungsprozess mit definierten Krümmungen versehen werden können.

Zur außermittigen Durchführung der Dorne durch das rotierende Umlenkelement kann entweder die Führung der Dorne quer zur Vorschubrichtung um eine in Bezug auf die konzentrische Durchführung der Dorne durch das Umlenkelement verlagerte Position verschoben werden. Alternativ oder zusätzlich hierzu kann auch das Umlenkelement mit dem Spulengatter quer zur Vorschubrichtung von einer in Bezug auf die konzentrische Durchführung der Dorne durch das Umlenkelement verlagerte Position verschoben werden. Dabei kann die Verschiebung in horizontaler und/oder vertikaler Richtung erfolgen.

Die Erfindung wird weiterhin mit der gattungsgemäßen Vorrichtung zur Herstellung gekrümmter, fadenverstärkter, schlauchförmiger Gebilde durch Führungsmittel gelöst, um die Dorne im Bereich des Umlenkelementes außermittig durch das Umlenkelement des Spulengatters zu führen.

Wiederum können die Führungsmittel entweder mit den Dornen zusammenwirken, um die Dorne quer zur Vorschubrichtung um eine in Bezug auf die konzentrische Durchführung der Dorne durch das Umlenkelement verlagerte Position zu verschieben. Zusätzlich oder alternativ hierzu können die Führungsmittel auch mit dem Spulengatter zusammenwirken, um das Spulengatter quer zur Vorschubrichtung um eine in Bezug auf die konzentrische Durchführung der Dorne durch das Umlenkelement verlagerte Position zu verschieben.

Die Erfindung wird nachfolgend anhand der beigefügten Zeichnungen beispielhaft erläutert:
- Figur 1 -: Skizze eines Ausschnitts einer Einrichtung zur Herstellung gekrümmter, fadenverstärkter, schlauchförmiger Gebilde mit außermittiger Durchführung eines Dorns durch ein Umlenkelement;
- Figur 2 -: Skizze einer gekrümmten Luftfeder mit gekrümmten Luftfederbalg.

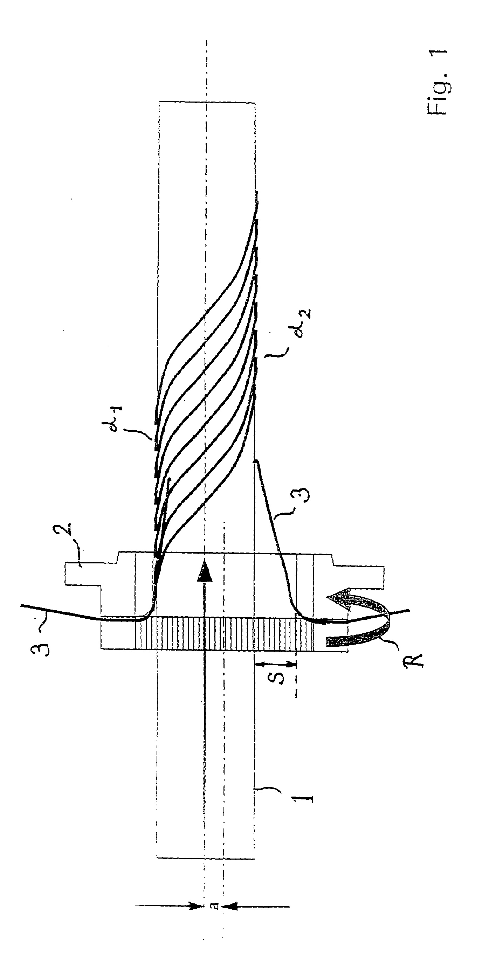

Die Figur 1 lässt eine Skizze eines Ausschnitts einer erfindungsgemäßen Einrichtung zur Herstellung gekrümmter, fadenverstärkter, schlauchförmiger Gebilde erkennen, bei denen ein oder mehrere Lagen von Kautschukschichten und Festigkeitsträgerschichten in Form von Fadengelegen auf einen Dorn 1 aufgebracht werden. Die Kautschukschichten werden beispielsweise durch Extrusion in hinreichend bekannter Weise auf den Dorn und/oder eine Fadenlage aufgebracht.

Die Dorne werden in einem kontinuierlichen Prozess in eine Vorschubrichtung X durch die hintereinander angeordneten Extrusionseinrichtungen zur Aufbringung der Kautschukschichten und Spulengatter zur Aufbringung der Fadenlagen vorgeschoben. Die Spulengatter haben hierbei ein in eine Rotationsrichtung R rotierendes Umlenkelement 2, mit dem Verstärkungsfäden 3 in einem auf die Vorschubrichtung X bezogenen Fadenwinkel α auf den Dorn 1 aufgebracht werden, wobei der Fadenwinkel α abhängig von der Vorschubgeschwindigkeit des Dorns 1 und dem Spalt S zwischen dem Innenumfang des Umlenkelementes 2 und dem angrenzenden Außenumfang des Dorns 1 ist.

Erfindungsgemäß wird der Dorn 1 nunmehr außermittig um einen Abstand a von der Rotationsachse des Umlenkelementes 2 versetzt durch das Umlenkelement 2 geführt. Dies führt dazu, dass im Umfangsbereichs des Dorns 1 mit dem kleineren Spalt S die Verstärkungsfäden 3 mit einem anderen Fadenwinkel α₁, als im Umfangsbereich des Dorns 1 mit dem größeren Spalt S aufgebracht werden. Über die Länge des Dorns 1 bleibt der Fadenwinkel α pro Umfangsbereich jedoch bei konstanter Verschiebung des Dorns 1 um die Rotationsachse mit dem Abstand a gleich.

Während der Herstellung der fadenverstärkten, schlauchförmigen Gebilde kann die außermittige Verschiebung a beliebig angepasst werden. Auch können Teilbereiche mit gleichem Fadenwinkel α über dem Umfang durch mittige Durchführung des Dorns 1 durch das Umlenkelement 2 vorgesehen sein. Auf diese Weise können komplizierte gekrümmte Formen des fadenverstärkten, schlauchförmigen Gebildes hergestellt werden.

Aufgrund der unterschiedlichen Fadenwinkel α über dem Umfang des fadenverstärkten, schlauchförmigen Gebildes bildet sich unter Druck eine gekrümmte Form derart aus, dass im Bereich der kleineren Fadenwinkel α₁ ein kleiner Radius und im Bereich der großen Fadenwinkel α₂ ein großer Radius entsteht.

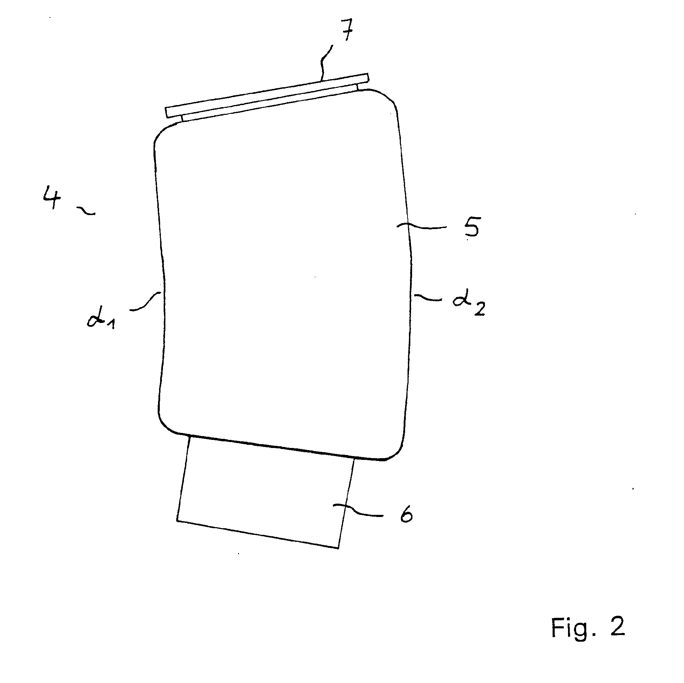

Die Figur 2 lässt eine Skizze einer gekrümmten Luftfeder 4 mit einem Luftfederbalg 5 erkennen, der über einen Kolben 6 und einen Deckel 7 gezogen ist.

Die gekrümmte Form des Luftfederbalges 5 wird erzwungen, in dem der Fadenwinkel α der Verstärkungsfäden 3 über den Umfang verteilt unterschiedlich ist. So ist im Bereich des kleineren Radius auf der linken Seite der Fadenwinkel α₁ kleiner als der Fadenwinkel α₂ auf der rechten Seite mit dem größeren Radius.

Derartige Luftfedern 4 können auch bei Einbausituationen eingesetzt werden, bei denen beispielsweise aufgrund der Achskardanik der Kolben eine gekrümmte Form der Luftfedern 4 notwendig ist. Die hieraus resultierenden Rollfaltenbreiten zwischen Luftfederbalg 5 und Kolben 6 werden durch die Anpassung der Fadenwinkel durch das erfindungsgemäße Verfahren auf die entsprechende Achskardanik optimal ausgelegt, so dass die Lebensdauer der Luftfedern 4 erhöht wird. Zudem lassen sich gekrümmte Luftfedern 4 besser an die engen Bauräume in Fahrzeugen anpassen und die dynamischen Eigenschaften und somit die Fahreigenschaften des Fahrzeugs verbessern.

## Patentansprüche

1. Verfahren zur Herstellung gekrümmter fadenverstärkter, schlauchförmiger Gebilde aus Kautschuk- und Festigkeitsträgerschichten mit den Schritten:
a) Aufbringen einer ersten Kautschukschicht auf den Umfang von in eine Vorschubrichtung (X) vorgetriebenen Dornen (1);
b) Aufspiralisieren einer Vielzahl von parallelen Verstärkungsfäden (3) mit definierten Fadenwinkeln (α) bezogen auf die Vorschubachse mit einem Spulengatter zur Ausbildung einer ersten Fadenlage, wobei die Dorne (1) durch ein die Dorne (1) umschließendes und die Verstärkungsfäden (3) am Innenumfang verteilt führendes rotierendes Umlenkelement (2) geführt werden;
c) Aufbringen einer Deck-Kautschukschicht nach wahlweise mehrfacher Ausführung der Schritte a) und/oder b);
**dadurch gekennzeichnet, dass**
die Dorne (1) im Bereich des Umlenkelementes (2) außermittig durch das Umlenkelement (2) des Spulengatters geführt werden.

2. Verfahren nach Anspruch 1, **gekennzeichnet durch** Verschieben einer Führung der Dorne (1) quer zur Vorschubrichtung (X) um eine in Bezug auf die konzentrische Durchführung der Dorne (1) **durch** das Umlenkelement (2) verlagerte Position.

3. Verfahren nach Anspruch 1, **gekennzeichnet durch** Verschieben des Umlenkelementes (2) mit dem Spulengatter quer zur Vorschubrichtung (X) von einer in Bezug auf die konzentrische Durchführung der Dorne (1) **durch** das Umlenkelement (2) verlagerte Position.

4. Vorrichtung zur Herstellung gekrümmter, fadenverstärkter, schlauchförmiger Gebilde nach dem Verfahren nach einem der vorhergehenden Ansprüche mit mindestens einem Spulengatter, das ein in eine Vorschubrichtung (X) vortreibbare Dorne (1) umschließendes und Verstärkungsfäden (3) am Innenumfang verteilt führendes rotierbares Umlenkelement (2) hat, **dadurch gekennzeichnet, dass** die Vorrichtung einstellbare Führungsmittel hat, um die Dorne (1) im Bereich des Umlenkelementes (2) außermittig durch das Umlenkelement (2) des Spulengatters zu führen.

5. Vorrichtung nach Anspruch 1, **dadurch gekennzeichnet, dass** die Führungsmittel mit den Dornen (1) zusammenwirken, um die Dorne (1) quer zur Vorschubrichtung (X) um eine in Bezug auf die konzentrische Durchführung der Dorne (1) durch das Umlenkelement (2) verlagerte Position zu verschieben.

6. Vorrichtung nach Anspruch 4, **dadurch gekennzeichnet, dass** die Führungsmittel mit dem Spulengatter zusammenwirken, um das Spulengatter quer zur Vorschubrichtung (X) um eine in Bezug auf die konzentrische Durchführung der Dorne (1) durch das Umlenkelement (2) verlagerte Position zu verschieben.
